# EUROPÄISCHE PATENTSCHRIFT

(11) **EP 3 620 327 B1**
(45) Veröffentlichungstag und Bekanntmachung des Hinweises auf die Patenterteilung: **20.09.2023**
(21) Anmeldenummer: 19184288.9
(22) Anmeldetag: 04.07.2019
(51) Int. Cl.: B60P 1/16, B60P 1/64

(54) **HAKENLIFTFAHRZEUG SOWIE CONTAINER FÜR EIN HAKENLIFTFAHRZEUG**
HOOK-LIFT VEHICLE AND CONTAINER FOR A HOOK-LIFT VEHICLE
VÉHICULE ÉLÉVATEUR À CROCHET AINSI QUE CONTENANT POUR UN VÉHICULE ÉLÉVATEUR À CROCHET

(30) Priorität: 06.09.2018 DE 102018121747
(43) Veröffentlichungstag der Anmeldung: 11.03.2020
(60) Teilanmeldung: 21192400.6
(73) Patentinhaber: Münz Fahrzeugbau GmbH & Co. KG, 72124 Pliezhausen (DE)
(72) Erfinder: Bayha, Steffen, 72124 Pliezhausen (DE)
(74) Vertreter: Kohler Schmid Möbus Patentanwälte

(56) Entgegenhaltungen:
- EP-A1- 2 626 241
- DE-A1-102015 115 375
- DE-U1-202013 103 654
- DE-U1-202014 007 007
- US-A- 4 652 201
- US-A1- 2004 083 671
- US-A1- 2012 025 590

## Beschreibung

Die Erfindung geht aus von einem Hakenliftfahrzeug mit einem Hakenlift zum Auf- und/oder Abladen eines Containers.

Solche Hakenliftfahrzeuge sind beispielsweise in Form von Anhängern oder LKWs bekannt. Sie ermöglichen es, einen geeignet ausgebildeten Container mittels des Hakenlifts insbesondere heckseitig, d. h. hinter dem Hakenliftfahrzeug, abzuladen oder von hinten auf das Hakenliftfahrzeug aufzuladen.

So kann ein Container beispielsweise mittels des Hakenliftfahrzeugs zu einer Baustelle transportiert, dort abgeladen, mit Ladegut, beispielsweise Bauschutt, befüllt und sodann wieder auf das Hakenliftfahrzeug aufgeladen und abtransportiert werden. Dabei kann ein und das gleiche Hakenliftfahrzeug für mehrere Container zeitparallel verwendet werden. So kann ein Container beispielsweise über mehrere Tage hinweg befüllt werden, während das Hakenliftfahrzeug an einem anderen Ort und/oder mit einem anderen Container verwendet wird.

Bedingt dadurch, dass das Auf- und Abladen heckseitig des Hakenliftfahrzeugs erfolgt, erfordert der Einsatz eines Hakenliftfahrzeugs jedoch einen vergleichsweise großen Parkraum.

Gerade im kommunalen als auch im landwirtschaftlichen Bereich und Baubereich ist es ferner üblich, für unterschiedliche Anwendungsfälle unterschiedliche Transportfahrzeuge bereitzuhalten. Hierdurch ergeben sich jedoch sehr hohe Kosten für die Bereitstellung und Wartung eines solchen Fuhrparks. Diese Kosten ließen sich reduzieren, wenn multifunktionale Transportfahrzeuge zum Einsatz kommen könnten. Wünschenswert wäre daher ein Hakenliftfahrzeug, mit dem in besonders vielfältiger Weise übliche Containergüter, beispielsweise Schüttgüter, Maschinen, usw. aufgeladen, abgeladen und/oder transportiert werden können.

Aus der DE 20 2013 103 654 U1 ist ein gattungsgemäßes Transportfahrzeug zum Aufnehmen und Absetzen eines Behälters bekannt. Auf das bekannte Transportfahrzeug kann ein Container mittels eines an einem Schlitten geführten Hakens aufgezogen werden.

Aus der US 2012 / 0 025 590 A1 ist ein Fahrzeug bekannt, das einen Container heckseitig abladen kann. Darüber hinaus kann der Container seitlich abgekippt werden.

Die US 2004 / 0083671 A1 offenbart einen Container, dessen Seitenwände um eine untere parallel zur Längsachse verlaufende Achse abklappbar sind.

Aufgabe der vorliegenden Erfindung ist es daher, ein Hakenliftfahrzeug mit erweiterten Nutzungsmöglichkeiten bereitzustellen.

Gelöst wird diese Aufgabe durch ein Hakenliftfahrzeug mit den Merkmalen des Patentanspruchs 1.

Der Hakenlift kann insbesondere zum heckseitigen Auf- und/oder Abladen des Containers eingerichtet sein. Der Hakenlift kann einteilig oder mehrteilig, insbesondere ein- oder mehrarmig, ausgebildet sein. Er kann ausgebildet sein, den Container an dessen Vorderseite zu greifen. Alternativ oder ergänzend kann der Hakenlift auch im Bereich einer oder beider Längsseiten des Hakenliftfahrzeugs angeordnet sein. Insbesondere kann er dann ausgebildet sein, den Container an dessen Seitenwänden zu greifen.

Ein solches Hakenliftfahrzeug bietet eine Vielzahl von Nutzungsmöglichkeiten. So kann der Container insbesondere heckseitig auf- und/oder abgeladen werden. Mittels des Hakenlifts kann der Container alternativ auch nach hinten abgekippt werden. Dazu kann das Hakenliftfahrzeug als Abrollkippfahrzeug ausgebildet sein.

Soweit das Hakenliftfahrzeug eingerichtet ist, den aufgeladenen Container entlang der wenigstens einen Längsseite des Hakenliftfahrzeugs seitlich abzukippen, kann der Container, beispielsweise wenn hinter dem Hakenliftfahrzeug nur wenig Raum zur Verfügung steht, auch entlang der Längsseite des Hakenliftfahrzeugs be- und/oder entladen werden. Bei einem solchen Hakenliftfahrzeug können somit beispielsweise auch Schüttgüter zusätzlich zum bisher üblichen heckseitigen Abladen des befüllten Containers zusätzlich bzw. alternativ über wenigstens eine Längsseite abgekippt werden. Somit kann das Hakenliftfahrzeug auch als Mehrseitenkipper genutzt werden.

Soweit das Hakenliftfahrzeug heckseitig absenkbar ausgebildet ist, können beispielsweise fahrbare Arbeitsmaschinen auf das heckseitig abgesenkte Hakenliftfahrzeug einfacher aufgefahren und/oder von diesem heruntergefahren werden. Insbesondere kann das Hakenliftfahrzeug ein heckseitig absenkbares Fahrgestell aufweisen.

Somit sind die Verwendungsmöglichkeiten eines erfindungsgemäßen Hakenliftfahrzeugs gegenüber einem herkömmlichen Hakenliftfahrzeug deutlich erweitert. In kommunalen als auch in landwirtschaftlichen Bereichen lässt sich der Nutzungsgrad eines solchen Hakenliftfahrzeugs verbessern, wodurch sich erhebliche Kostenvorteile ergeben können und/oder wodurch sich die Amortisationsdauer eines Hakenliftfahrzeugs für den Verwender verkürzt.

Dazu kann das Hakenliftfahrzeug eine Seitkippvorrichtung zum seitlichen Abkippen des aufgeladenen Containers entlang der wenigstens einen Längsseite des Hakenliftfahrzeugs aufweisen.

Die Seitkippvorrichtung kann eingerichtet sein, den Container wahlweise zur linken oder zur rechten Längsseite des Hakenliftfahrzeugs abzukippen. Unter linker bzw. rechter Seite bzw. Längsseite kann dabei die jeweilige Seite bei Blick entlang der üblichen Fahrtrichtung des Hakenliftfahrzeugs verstanden werden.

Der Container kann somit wahlweise sowohl von der linken als auch von der rechten Seite aus be- und/oder entladen werden. Somit kann das Hakenliftfahrzeug auch als weiter verbesserter Mehrseitenkipper, insbesondere als Dreiseitenkipper, beispielsweise in der Landwirtschaft, genutzt werden.

Denkbar ist insbesondere, dass die Seitkippvorrichtung wenigstens einen, insbesondere ein oder zwei, Kippzylinder aufweist. Die Kippzylinder können beispielsweise hydraulisch oder pneumatisch betätigbar sein. Durch solche Kippzylinder kann ein hoher Hub erzielt werden bei gleichzeitig geringem Platzbedarf, insbesondere in Höhenrichtung. Somit kann eine ausreichende Bodenfreiheit gewährleistet werden.

Wenigstens einer der Kippzylinder kann als doppeltwirkender Zylinder ausgebildet sein. Somit kann der Kippzylinder, insbesondere in seinem eingefahrenen Zustand, auch zur Fixierung der Seitkippvorrichtung, des Hakenlifts und/oder des Containers an einem Fahrgestell des Hakenliftfahrzeugs verwendet werden.

Die Seitkippvorrichtung umfasst einen seitlich abkippbaren Zwischenrahmen, an dem der Hakenlift oder wenigstens ein Teil des Hakenlifts angeordnet ist. Insbesondere kann dann der wenigstens eine Kippzylinder zwischen dem Fahrgestell und dem Zwischenrahmen angeordnet sein. Dann kann der wenigstens eine Kippzylinder - durch Ausfahren des Kippzylinders - den Zwischenrahmen mitsamt dem an diesem angeordneten Hakenlift sowie gegebenenfalls einem aufgeladenen Container seitlich abkippen oder - durch Einfahren des Kippzylinders - den Zwischenrahmen samt Hakenlift und gegebenenfalls Container in seine horizontale Ausgangslage zurückbewegen. Auch kann der wenigstens eine doppeltwirkende Kippzylinder, beispielsweise vor Betätigen des Hakenlifts, insbesondere in eingefahrenem Zustand, den Zwischenrahmen auf das Fahrgestell spannen und damit den Hakenlift und somit auch den Container gegen ein seitliches und/oder gegen ein heckseitiges Abkippen fixieren.

Die Seitkippvorrichtung kann wenigstens zwei Verriegelungen, vorzugsweise Bolzen- oder Krampenverriegelungen, aufweisen, die eingerichtet sind, den aufgeladenen Container, insbesondere durch drehbares Festlegen des Zwischenrahmens, an einer Längsseite des Hakenliftfahrzeugs drehbar festzulegen. Somit kann der Container, insbesondere mittels des Zwischenrahmens, an dieser Längsseite drehbar am Hakenliftfahrzeug, insbesondere an seinem Fahrgestell, festgelegt werden. Wird sodann der bzw. werden sodann die Kippzylinder ausgefahren, kann der Container, insbesondere mittels des Zwischenrahmens, zu dieser Längsseite hin abgekippt werden. Ein oder mehrere der Verriegelungen können hydraulisch und/oder pneumatisch betätigbar sein. Dann kann der seitliche Abkippvorgang automatisiert und/oder "per Knopfdruck" gesteuert werden.

Besonders günstig ist es, wenn wenigstens vier derartige Verriegelungen, insbesondere jeweils wenigstens zwei Verriegelungen auf jeder der beiden Längsseiten des Hakenliftfahrzeugs, vorgesehen sind. Somit ist es möglich, den Container, insbesondere mittels des Zwischenrahmens, wahlweise an jeder der beiden Längsseiten des Hakenliftfahrzeugs drehbar festzulegen, sodass auf besonders einfache Weise ein seitliches Abkippen wahlweise sowohl zur rechten als auch zur linken Seite hin ermöglicht wird. Denkbar ist dann auch, dass, um den Container bzw. den Zwischenrahmen auf das Fahrgestell zu spannen alternativ oder ergänzend Verriegelungen entlang beider Längsseiten verriegelt werden. Zusätzlich kann, insbesondere für diesen Fall, wenigstens ein Abschaltventil zur Abschaltung eines oder mehrerer der Kippzylinder vorgesehen sein.

Bei einer besonders bevorzugten Klasse von Ausführungsformen der Erfindung ist vorgesehen, dass der Hakenlift teleskopierbar ist. Dazu kann der Hakenlift entlang einer Längsrichtung des Hakenliftfahrzeugs und/oder senkrecht oder im Wesentlichen senkrecht zu dieser, insbesondere vertikal, teleskopierbar sein. Insbesondere kann der Hakenlift derart vertikal teleskopierbar sein, dass die Höhenlage seines Hakens an ein oder mehrere Standardhöhen, beispielsweise 1570 und/oder 900 mm, von Griffelementen von Containern, anpassbar ist. Der Hakenlift kann hydraulisch und/oder pneumatisch teleskopierbar sein.

Somit kann das Hakenliftfahrzeug für unterschiedliche Arten von Containern, insbesondere für unterschiedlich lange Container und/oder Container mit unterschiedlich hoch angeordneten Griffelementen, verwendet werden. Auch hierdurch lassen sich die Einsatzmöglichkeiten des Hakenliftfahrzeugs zusätzlich erweitern. Das Auf- und/oder Abladen des Containers kann vereinfacht werden.

Während der Haken des Hakenlifts üblicherweise die Form eines geöffneten, näherungsweise elliptischen Ringes aufweisen kann, mit dem er den Container an einem geeignet komplementär ausgebildeten Griffelement greifen kann, ist es auch denkbar, den Haken in anderer Form auszubilden. Beispielsweise kann der Haken alternativ oder ergänzend als Rastelement, beispielsweise karabinerförmig, und/oder zangenförmig, insbesondere mit ein oder mehreren, relativ zueinander bewegbaren Teilen, ausgebildet sein. Der Haken kann besonders bevorzugt als Automatik-Haken ausgebildet sein.

Bei einer besonders bevorzugten Klasse von Ausführungsformen weist das Hakenliftfahrzeug ein heckseitig absenkbares Fahrgestell auf. Vorzugsweise kann das Fahrgestell heckseitig zum Boden hin abgesenkt werden. Dies kann das Auf- und/oder Abladen des Containers erleichtern. Auch kann der Container mit einer geringeren maximalen Neigung gegen die Horizontale auf- bzw.- abgeladen werden. Ferner lässt sich hierdurch der Parkraumbedarf reduzieren.

Dazu kann das Fahrgestell ein Pendelachsaggregat, ein Luftfederaggregat und/oder ein Parabelfederaggregat aufweisen und/oder - insbesondere, wenn es sich bei dem Hakenliftfahrzeug um einen Anhänger handelt - eine Deichsel des Hakenliftfahrzeugs kann relativ zum Fahrgestell verschwenkbar ausgebildet sein.

Des Weiteren kann vorgesehen sein, dass das Hakenliftfahrzeug, insbesondere heckseitig, einen verstellbaren, insbesondere entlang des Fahrgestells verschiebbaren, Beleuchtungsträger aufweist. Somit lässt sich das Hakenliftfahrzeug zusätzlich an unterschiedliche, insbesondere unterschiedlich lange, Container anpassen. Vorzugsweise kann der Beleuchtungsträger elektrisch, hydraulisch und/oder pneumatisch verschiebbar ausgebildet sein.

Denkbar ist auch, dass das Hakenliftfahrzeug als Anhänger oder als Lkw ausgebildet ist. Als Anhänger kann es zusammen mit unterschiedlichsten Zugfahrzeugen eingesetzt werden. Ist es als Lkw ausgebildet, wird kein weiteres Zugfahrzeug benötigt.

Das Hakenliftfahrzeug kann - insbesondere in Abhängigkeit der beabsichtigten maximalen Zuladung - in seinem Ladeabschnitt ein-, zwei- oder dreiachsig ausgebildet sein. Es versteht sich, dass insbesondere bei einem als Lkw ausgebildeten Hakenliftfahrzeug weitere Achsen außerhalb des Ladeabschnitts, insbesondere im Bereich des Fahrergehäuses, vorgesehen sein können.

Ein besonders vielseitig verwendbarer Container kann wenigstens eine pendelbare und abklappbare seitliche Bordwand und eine pendelbare und abklappbare heckseitige Bordwand aufweisen.

Wenigstens eine seiner Achsen seines Ladeabschnitts kann entlang der Längsrichtung verstellbar, insbesondere hydraulisch verstellbar, sein. Ist das Hakenliftfahrzeug beispielsweise als Anhänger ausgebildet, so kann durch Verstellen der Achse ein Gewichtsausgleich erzielt werden. Insbesondere kann die auf eine Zugöse des Anhängers wirkende Stützlast eingestellt werden.

Das Hakenliftfahrzeug lässt sich besonders einfach bedienen, wenn wenigstens eine seiner Funktionalitäten, insbesondere Aufladen, Abladen, heckseitiges Absenken und/oder seitliches Abkippen des Hakenliftfahrzeugs, Öffnen und/oder Schließen des Containers, Öffnen und/oder Schließen wenigstens einer der Verriegelungen, Verstellen der Achse und/oder Verstellen des Beleuchtungsträgers, fernsteuerbar, insbesondere mittels einer Funkfernsteuerung, ist. Allgemein ist denkbar, dass wenigstens eines der betätigbaren Elemente, insbesondere der elektrisch, hydraulisch und/oder pneumatisch betätigbaren Elemente, fernsteuerbar ausgebildet sein kann. Bei beispielsweise hydraulisch und/oder pneumatisch betätigbaren Elementen kann insbesondere ein jeweiliger pneumatischer oder hydraulischer Betätigungszylinder des betreffenden Elementes fernsteuerbar ausgebildet sein.

Auch ist es beispielsweise denkbar, dass das Hakenliftfahrzeug, insbesondere die Funkfernsteuerung, einen Wählschalter aufweist, mit dem wenigstens eine dieser Funktionalitäten auslösbar und/oder steuerbar ist.

Ein Container für ein erfindungsgemäßes Hakenliftfahrzeug kann sowohl ein heckseitiges Abladen und/oder Aufladen mittels eines Hakenlifts des Hakenliftfahrzeugs als auch eine Nutzung des Hakenliftfahrzeugs als Seitenkipper, insbesondere als Zweiseitenkipper oder - insbesondere wenn beide seitlichen Bordwände öffenbar sind - als Dreiseitenkipper, ermöglichen. Der Container weist eine seitliche Bordwand auf, diese kann auch mehrfach, insbesondere zweifach, geteilt sein, so dass die Bordwand in zwei oder mehr Teilen, insbesondere Flügeln, öffenbar ist. Ist wenigstens eine seitliche Bordwand abklappbar, so lassen sich beispielsweise auch nicht schüttbare Güter einfach ein- und entladen.

Bei einem solchen Container kann insbesondere vorgesehen sein, dass seine heckseitige Bordwand pendelbar und/oder abklappbar, besonders bevorzugt pendelbar und abklappbar, und/oder wenigstens zu einer Seite hin verschwenkbar ist. Insbesondere kann die heckseitige Bordwand ähnlich einer Türe zur linken und/oder rechten Seite verschwenkbar sein. Denkbar ist auch, dass die heckseitige Bordwand mehrfach geteilt ist; beispielsweise kann die heckseitige Bordwand zweiflügelig gebildet sein. Dann kann die heckseitige Bordwand ähnlich einer zweiflügeligen Türe geöffnet werden, indem jeweils ein Flügel der Bordwand nach links und ein Flügel nach rechts geschwenkt wird.

Dadurch lässt sich die heckseitige Bordwand je nach Anwendungsfall geeignet öffnen. Beispielsweise kann sie zur Ausbildung einer Auffahrrampe, beispielsweise zum Aufladen von fahrbaren Arbeitsmaschinen, abgeklappt werden. Zum Entladen von Schüttgut kann die heckseitige Bordwand pendelnd geöffnet werden. Sollen beispielsweise größere Güter aufgeladen oder abgeladen werden, besteht zudem die Möglichkeit, die heckseitige Bordwand je nach Bedarf zur linken oder zur rechten Seite zu verschwenken oder - bei einer zweiflügeligen Bordwand - jeweils einen Flügel nach links und einen nach rechts zu verschwenken. Denkbar ist insbesondere, dass ein oder mehrere Bordwände über eine vorzugsweise steuerbare Verriegelung und/oder über eine Zentralverriegelung öffenbar sind. Insbesondere kann auch vorgesehen sein, dass die Funkfernsteuerung und/oder das Hakenliftfahrzeug eingerichtet sind, ein oder mehrere der Bordwände des Containers zu öffnen und/oder zu schließen.

Ferner ist es denkbar, dass insbesondere je nach beabsichtigtem Haupt-Einsatzbereich der Container als Mulde oder als Plattform-Container ausgebildet ist.

Auch können Container mit dem Hakenliftfahrzeug verwendet werden, wenn sie als Halfpipe-Container, als Schuttmulde, als Häckselmulde, beispielsweise mit Gittern und/oder Planen, als Flüssigkeitscontainer oder dergleichen ausgebildet sind.

Am Container und/oder am Hakenliftfahrzeug kann wenigstens eine insbesondere abnehmbare Auffahrrampe angeordnet sein. Bevorzugt können zwei solche Auffahrrampen vorgesehen sein. Dazu kann der Container und/oder das Hakenliftfahrzeug eine entsprechende Anzahl Auffahrrampenhalterungen zur Aufnahme und zum Transport der Auffahrrampen aufweisen. Solche Auffahrrampen können das Auffahren in den Container und/oder Herunterfahren vom Container von beispielsweise fahrbaren Arbeitsmaschinen zusätzlich erleichtern.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine Seitenansicht eines ersten, als Anhänger ausgebildeten Hakenliftfahrzeugs mit einem auf das Hakenliftfahrzeug aufgeladenen Container;
- Fig. 2: eine Seitenansicht des Hakenliftfahrzeugs der Fig. 1 in einer abgesenkten Stellung mit abgeklappter heckseitiger Bordwand;
- Fig. 3: eine Seitenansicht des Hakenliftfahrzeugs der Fig. 1 in einer abgesenkten Stellung während des Entladens des Containers;
- Fig. 4 und 5: Seitenansichten des Hakenliftfahrzeugs der Fig. 1 in nichtabgesenkten Stellungen während des Entladens des Containers;
- Fig. 6: eine Seitenansicht des Hakenliftfahrzeugs der Fig. 1 in einer nicht-abgesenkten Stellung mit nach hinten abgekipptem Container;
- Fig. 7a: eine Detailansicht eines Hakenlifts und eines Zwischenrahmens des Hakenliftfahrzeugs der Fig. 1 als schematische Seitenansicht;
- Fig. 7b: eine Containerverriegelung in schematischer, perspektivischer Darstellung;
- Fig. 8: eine Seitenansicht des Hakenliftfahrzeugs der Fig.1 in einer Stellung mit nach links abgekipptem Container;
- Fig. 9: eine Ansicht von hinten auf das Hakenliftfahrzeug der Fig. 1 in der Stellung gemäß Fig. 8;
- Fig. 10 und 11: schematische Seitenansichten zweier weiterer als Anhänger ausgebildeter Hakenliftfahrzeuge und
- Fig. 12: eine Seitenansicht eines vierten, als LKW ausgebildeten Hakenliftfahrzeugs in einer Stellung mit nach links abgekipptem Container.

Zur Erleichterung des Verständnisses der Erfindung sind, soweit nicht anders genannt, sich entsprechende Elemente in allen Figuren der Zeichnung sowie in der nachfolgenden Beschreibung mit denselben Bezugszeichen bezeichnet.

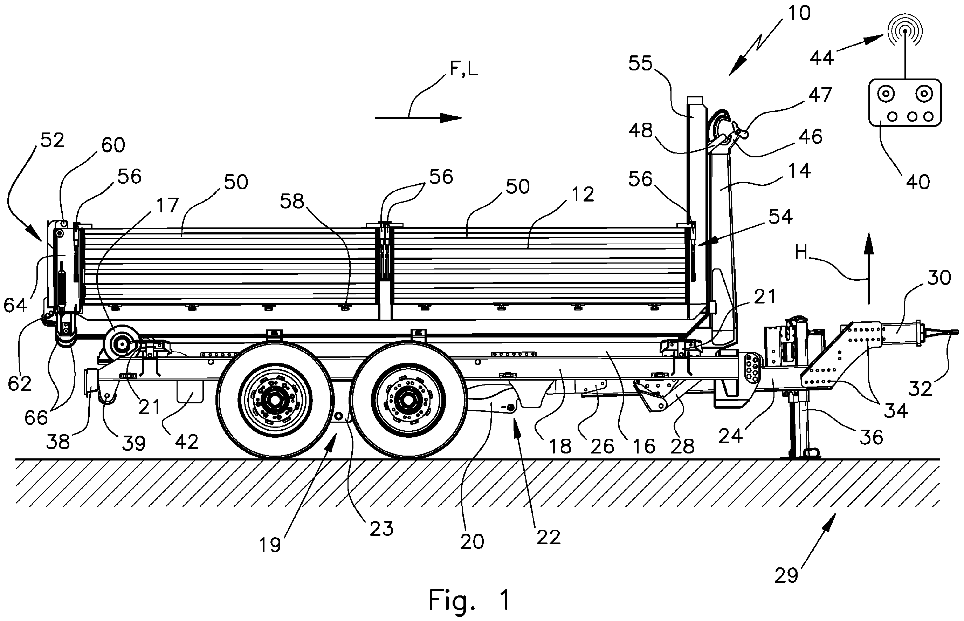

**Fig. 1** zeigt ein erstes Hakenliftfahrzeug **10.** Das Hakenliftfahrzeug 10 ist in diesem Ausführungsbeispiel als Fahrzeuganhänger ausgebildet, der üblicherweise in einer Fahrtrichtung **F** bewegt wird. Auf dem Hakenliftfahrzeug 10 ist ein Container **12** aufgeladen. Der Container 12 ist als Mulde ausgebildet.

Das Hakenliftfahrzeug 10 weist einen Hakenlift **14** auf, der an einem Zwischenrahmen **16** angeordnet ist. Der Hakenlift 14 ist in Längsrichtung des Zwischenrahmens 16 teleskopierbar ausgebildet. Im in Fig. 1 dargestellten Zustand liegt der Zwischenrahmen 16 auf einem Fahrgestell **18** auf.

Das Fahrgestell 18 weist eine mittels eines Verstellzylinders (in Fig. 1 nicht sichtbar) entlang der der Fahrtrichtung F entsprechenden Längsrichtung **L** auf einer (in Fig. 1 ebenfalls nicht sichtbaren) Führungsschiene verstellbare, insbesondere hydraulisch verstellbare, Achse **19** auf.

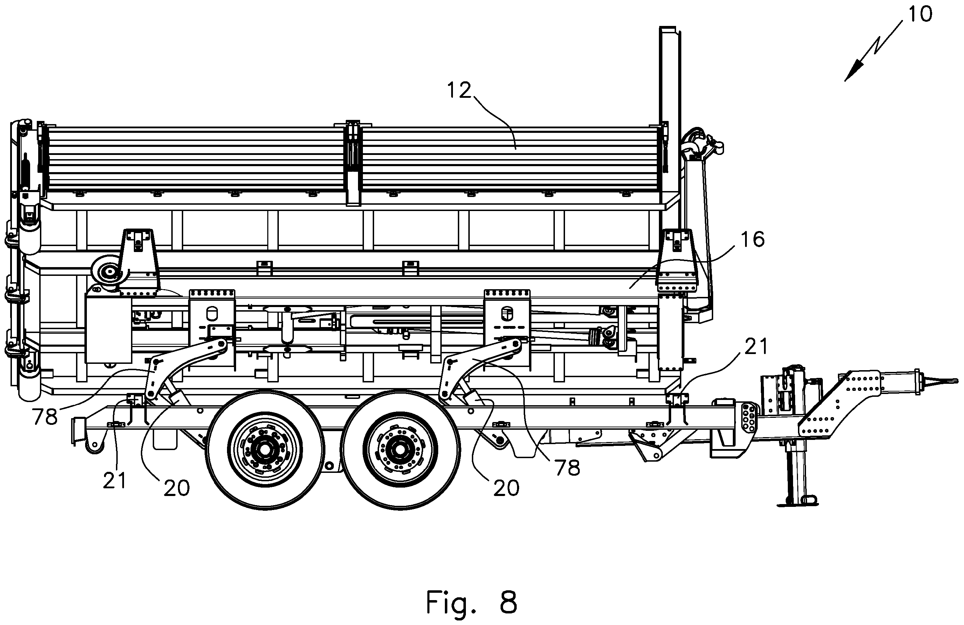

Zwischen dem Zwischenrahmen 16 und dem Fahrgestell 18 sind zwei Kippzylinder **20** (s. auch Fig. 8) angeordnet, von denen in der Seitenansicht gemäß Fig. 1 lediglich ein Kippzylinder 20 erkennbar ist. Die Kippzylinder 20 sind als doppeltwirkende Hydraulikzylinder ausgebildet. Im in Fig. 1 dargestellten Zustand, in dem sich die Kippzylinder 20 in eingefahrenem Zustand befinden, spannen die Kippzylinder 20 den Zwischenrahmen 16 auf das Fahrgestell 18 auf und fixieren dadurch den Zwischenrahmen 16 am Fahrgestell 18. Die Kippzylinder 20 können als Hydraulikzylinder ausgebildet sein.

Sowohl links- als auch rechtsseitig des Zwischenrahmens 16 sind an diesem in seinem hinteren Bereich Führungsrollen **17** zur Führung des Containers 12 während des Ab- und/oder Aufladens vom bzw. auf das Hakenliftfahrzeug 10 angeordnet.

In allen Eckbereichen des Fahrgestells 18 sind Verriegelungen **21** angeordnet. Von diesen sind in der Seitenansicht der Fig. 1 lediglich zwei Verriegelungen 21 dargestellt. Die Verriegelungen 21 sind in diesem Ausführungsbeispiel als insbesondere steuerbare Bolzenverriegelungen ausgebildet. Die Verriegelungen 21 verbinden somit den Zwischenrahmen 16 lösbar mit dem Fahrgestell 18. Sie bilden in geschlossenem bzw. verriegeltem Zustand jeweils Drehlager. Sind somit auf einer ersten Längsseite des Hakenliftfahrzeugs 10 die jeweiligen Verriegelungen 21 mittels geeigneter Bolzen verriegelt und auf der anderen Längsseite des Hakenliftfahrzeugs 10 die entsprechenden Verriegelungen 21 geöffnet, so lässt sich der Zwischenrahmen 16 zu der ersten Längsseite hin abkippen, indem die Kippzylinder 20 ausgefahren werden.

Der Zwischenrahmen 16 bildet somit in Verbindung mit den Kippzylindern 20 und den Verriegelungen 21 insgesamt eine Seitkippvorrichtung **22** zum wahlweisen, seitlichen Abkippen des aufgeladenen Containers 12 entlang der ersten oder der anderen Längsseite. Mit anderen Worten lässt sich mithilfe der Seitkippvorrichtung 22 der aufgeladene Container 12 wahlweise zur linken oder rechten Längsseite des Hakenliftfahrzeugs 10 abkippen.

Weiter weist das Fahrgestell 18 ein zweiachsiges Pendelachsaggregat **23** auf. Eine Deichsel **24** des Fahrgestells 18 ist mittels einer Anbindung **26** sowie mit einer einen Hydraulikzylinder umfassenden Verschwenkmechanik **28** relativ zum übrigen Fahrgestell 18 verschwenkbar gelagert. Somit ist das Fahrgestell 18 - wie ebenfalls weiter unten noch näher erläutert wird - insgesamt absenkbar ausgebildet. Insbesondere kann der entsprechend der Fahrtrichtung F hintere bzw. heckseitige Teil des Fahrgestells 18 zum Boden **29** hin abgesenkt werden.

Zur Verbindung mit einem Zugfahrzeug (in Fig. 1 nicht dargestellt) weist das Hakenliftfahrzeug 10 an seiner entsprechend der Fahrtrichtung F vorderen Seite einen Verbindungsabschnitt **30** mit einer Zugöse **32** auf. Mittels zweier Flansche **34** ist die Lage des Verbindungsabschnitts 30 - und damit der Zugöse 32 - entlang der Längsrichtung L sowie in der zur Längsrichtung L orthogonalen Höhenrichtung **H** verstellbar. Somit lässt sich die Zugöse 32 und damit das Hakenliftfahrzeug 10 je nach Bedarf an unterschiedliche Zugfahrzeuge anpassen.

Mittels einer an der Deichsel 24 angeordneten Stütze **36** kann das Hakenliftfahrzeug 10, insbesondere bei nicht angehängtem Zugfahrzeug, am Boden 29 abgestützt werden.

Weiter weist das Hakenliftfahrzeug 10, insbesondere das Fahrgestell 18, an seiner hinteren Seite einen Beleuchtungsträger 38 auf. Der Beleuchtungsträger **38** ist entlang der Längsrichtung L verschiebbar am übrigen Fahrgestell 18 angeordnet. In diesem Ausführungsbeispiel ist er mittels eines Hydraulikzylinders (in Fig. 1 nicht sichtbar) verschiebbar. In alternativen Ausführungsformen kann er auch, beispielsweise mittels Klemmvorrichtungen oder mittels Verschraubungen in Verbindung mit in Längsrichtung L angeordneten, in das übrige Fahrgestell 18 eingearbeiteten Lochreihen, festlegbar ausgebildet sein.

Heckseitig am Hakenliftfahrzeug 10 sind ferner Stützräder **39** zu erkennen. In alternativen Ausführungen der Erfindung können anstelle der Stützräder 39 auch Stützelemente, beispielsweise Stützfüße, vorgesehen sein. Die Stützräder 39 dienen insbesondere zur Abstützung des Hakenliftfahrzeugs 10, insbesondere wenn das Fahrgestell 18 heckseitig zum Boden hin abgesenkt ist. Auch tragen die Stützräder 39 dazu bei, ein Anheben und/oder Kippen des Zugfahrzeugs, insbesondere während des Auf- und/oder Abladens des Containers 12, zu vermeiden.

Das Hakenliftfahrzeug 10 kann mittels einer Funkfernsteuerung **40** ferngesteuert bedient werden. Dazu weist das Hakenliftfahrzeug 10 an seinem Fahrgestell 18 eine Empfangs- und Steuerungseinheit **42** auf. Die Empfangs- und Steuerungseinheit 42 ist eingerichtet, von der Funkfernsteuerung 40 per Funk ausgesendete Steuerungssignale **44** zu empfangen und auszuwerten. Die Empfangs- und Steuerungseinheit 42 ist ferner eingerichtet, in Abhängigkeit dieser Steuerungssignale 44 die Kippzylinder 20, die Verschwenkmechanik 28, den Hakenlift 14, die Verriegelungen 21 zu betätigen, insbesondere je nach Bedarf auf jeweils einer Längsseite des Hakenliftfahrzeugs 10 zu öffnen oder zu schließen. Auch ist sie eingerichtet, alle weiteren im Zusammenhang mit dem Container 12 stehenden, betätigbaren Elemente, beispielsweise den Hydraulikzylinder zur Verschiebung des Beleuchtungsträgers 38 und/oder den Verstellzylinder der verstellbaren Achse 19, je nach Bedarf zu betätigen.

Der Hakenlift 14 weist einenends einen Haken **46** auf. Der Haken 46 ist mit einem elliptischen, geöffneten inneren Querschnitt ausgebildet. Ein federnd gelagertes Verschlusselement **47** dient zum selbsttätigen Verschluss der Öffnung des Hakens 46. Insgesamt ist der Haken 46 als Automatik-Haken ausgebildet.

Zur lösbaren Verbindung des Containers 12 mit dem Hakenlift 14 weist der Container 12 ein Griffelement **48** auf. Das Griffelement 48 ist halbringförmig geformt und in einer dem Haken 46 bzw. dem Hakenlift 14 angepassten Position am Container 12 angeordnet.

Der Container 12 weist mehrere Bordwände auf, insbesondere auf jeder seiner beiden Längsseiten je zwei seitliche Bordwände **50,** auf seiner Rückseite eine heckseitige Bordwand **52** sowie auf seiner Vorderseite eine vorderseitige Bordwand **54.**

Die seitlichen Bordwände 50 sind mittels mehrerer Bordwandverschlüsse **56,** von denen aus Darstellungsgründen in der Darstellung der Fig. 1 lediglich vier Bordwandverschlüsse 56 mit Bezugszeichen markiert sind, sowie mittels mehrerer Bordwandscharniere **58,** von denen ebenfalls aus Darstellungsgründen lediglich ein Bordwandscharnier 58 mit einem Bezugszeichen versehen ist, pendelbar und abklappbar am Container 12 angeordnet. Die seitlichen Bordwände 50 sind jeweils zweigeteilt.

Die heckseitige Bordwand 52 ist mittels eines Rückwandverschlusses **60,** mehreren Rückwandscharnieren **62** sowie einem Rückwandschwenkgelenk **64** pendelbar, abklappbar als auch seitlich verschwenkbar am übrigen Container 12 angeordnet. Insbesondere kann sie in abgeklapptem Zustand als Auffahrrampe genutzt werden.

Angrenzend an die vorderseitige Bordwand 54 befindet sich eine Tragwand **55** eines den Container stützenden Hauptrahmens. An der Tragwand 55 ist das Griffelement 48 an einer auf den Hakenlift 14, insbesondere auf die Position des Hakens 46, abgestimmten Höhenposition angeordnet. Dazu ist in diesem Ausführungsbeispiel die Tragwand 55 höher als die Höhenposition des Griffelements 48.

An der Unterseite des Containers 12 sind ferner im Bereich der heckseitigen Bordwand 52 Bodenrollen **66** angeordnet, durch die der Container 12 insbesondere während des Abladens und/oder während des Aufladens auf dem Boden 29 abrollen kann.

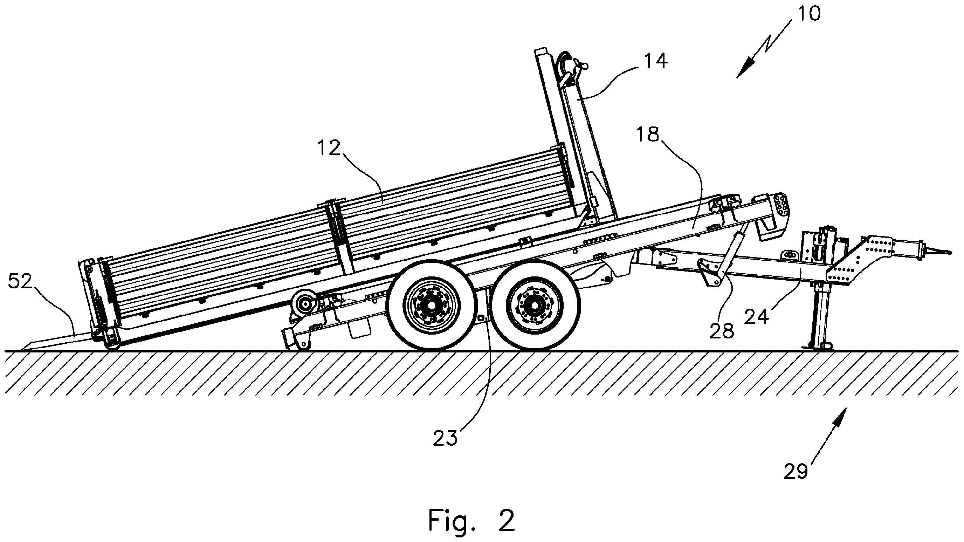

In **Fig. 2** bis **Fig. 9** werden beispielhaft weitere Nutzungsmöglichkeiten bzw. Anwendungsfälle des erfindungsgemäßen Hakenliftfahrzeugs 10 (Fig. 1) näher dargestellt.

**Fig. 2** zeigt eine Stellung des Hakenliftfahrzeugs 10 der Fig. 1, in der beispielsweise eine fahrbare Arbeitsmaschine (in Fig. 2 nicht dargestellt) einfach auf- und/oder abgeladen werden kann.

Zu erkennen ist, dass das Fahrgestell 18 mittels des Pendelachsaggregats 23 und der an der Deichsel 24 angeordneten Verschwenkmechanik 28 heckseitig zum Boden 29 hin abgesenkt ist. Durch die Absenkung ist auch der Container 12 gegen die Horizontale geneigt; insbesondere ist auch er heckseitig zum Boden 29 hin abgesenkt.

Durch teilweises Einfahren des teleskopierbaren Hakenlifts 14 ist der Container 12 in etwa zur Hälfte vom Fahrgestell 18 abgeladen. Zusätzlich ist die heckseitige Bordwand 52 zum Boden hin abgeklappt und bildet dadurch eine Auffahrrampe.

Somit kann die fahrbare Arbeitsmaschine bzw. das Ladegut über die heckseitige Bordwand 52 in den Container 12 hinein- bzw. aus diesem herausgefahren werden.

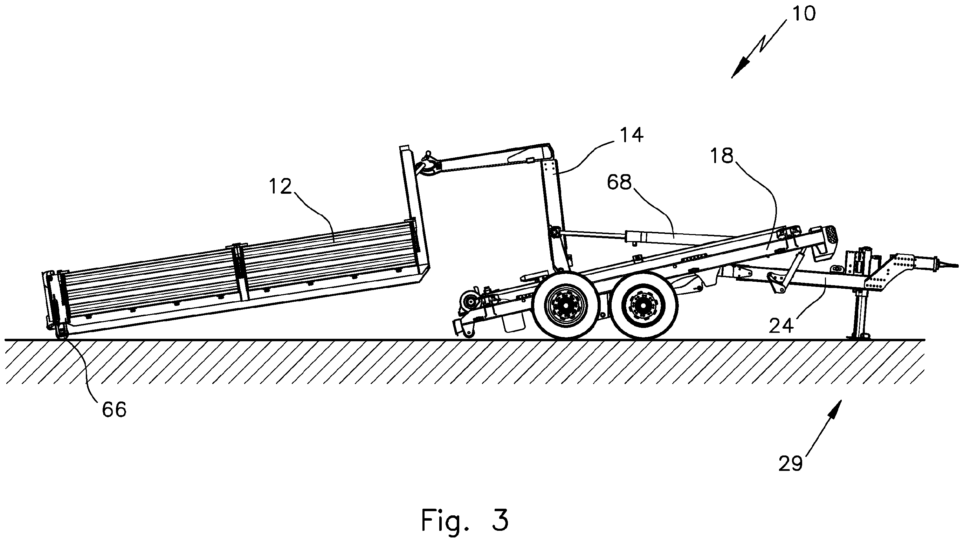

**Fig. 3** zeigt das Hakenliftfahrzeug 10 in einer Stellung während des Abladens des Containers 12. Diese Stellung kann auch für bzw. während des Aufladens des Containers 12 auf das Hakenliftfahrzeug 10 entsprechend genutzt werden.

Entsprechend der Stellung des Hakenliftfahrzeugs 10 gemäß Fig. 2 ist auch bei dem in Fig. 3 dargestellten Zustand des Hakenliftfahrzeugs 10 die Deichsel 24 gegen das Fahrgestell 18 verschwenkt, sodass wiederum das Hakenliftfahrzeug 10 heckseitig zum Boden 29 hin abgesenkt ist. Durch die Absenkung ist bei diesem Anwendungsfall der Parkraumbedarf hinter dem Hakenliftfahrzeug 10 verringert. Außerdem ist die maximale Neigung des Containers gegen die Horizontale während des Abladens reduziert.

Der Fig. 3 ist ferner zu entnehmen, dass der in der Seitenansicht L-förmige Hakenlift 14 von zwei Hydraulikzylindern **68,** von denen in der Darstellung der Fig. 3 lediglich einer erkennbar ist, angetrieben wird.

Der Container 12 kann somit wie folgt abgeladen werden (Entsprechendes gilt in umgekehrter Reihenfolge der Schritte, um den Container 12 aufzuladen):

Zunächst wird das Hakenliftfahrzeug 10 bzw. das Fahrgestell 18 heckseitig abgesenkt. Der teleskopierbare Hakenlift 14 wird vollständig eingefahren, sodass der Container 12 über das hintere Ende des Hakenliftfahrzeugs 10 hinaus verlagert wird. Durch Ausfahren der Hydraulikzylinder 68 wird der Hakenlift 14 aufgerichtet, wodurch der Container 12 auf den Bodenrollen 66 abrollend das Hakenliftfahrzeug 10 in einer Schwenkbewegung verlässt.

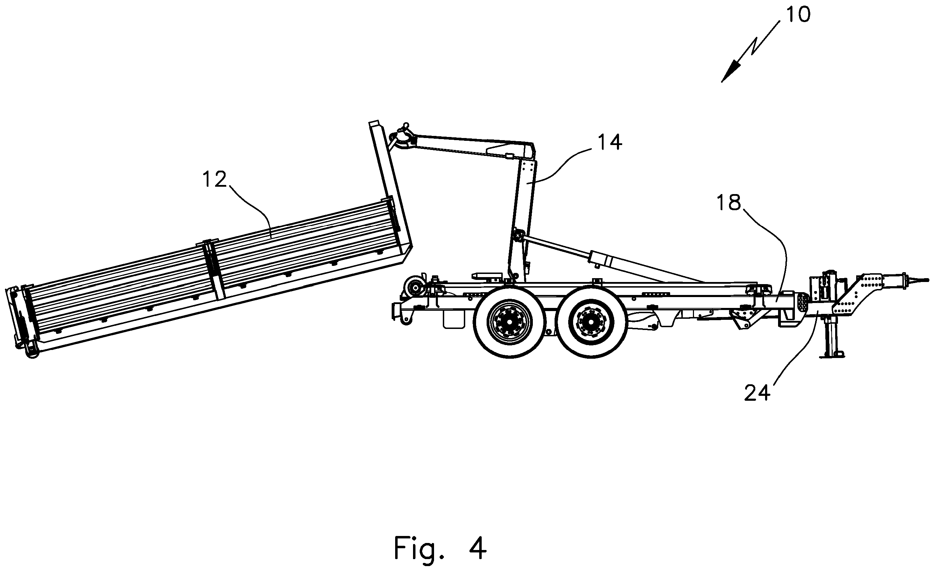

**Fig. 4** stellt eine alternative Nutzungsmöglichkeit zum Abladen bzw. Aufladen des Containers 12 von bzw. auf das Hakenliftfahrzeug 10 dar. Diese Alternative entspricht weitgehend dem Anwendungsfall gemäß Fig. 3. Ein Unterschied besteht lediglich darin, dass bei dieser Alternative die Deichsel 24 nicht gegen das Fahrgestell 18 verschwenkt ist. Somit ist das Hakenliftfahrzeug 10 auch nicht heckseitig abgesenkt. Jedoch lässt sich auch in diesem Fall der Container 12 entsprechend dem in Bezug auf Fig.3 geschilderten Vorgehen abladen bzw. aufladen. Dabei wird der Container 12 während des Aufrichtens des Hakenlifts 14 stärker gegen die Horizontale geneigt als bei dem vorangehend geschilderten Anwendungsfall.

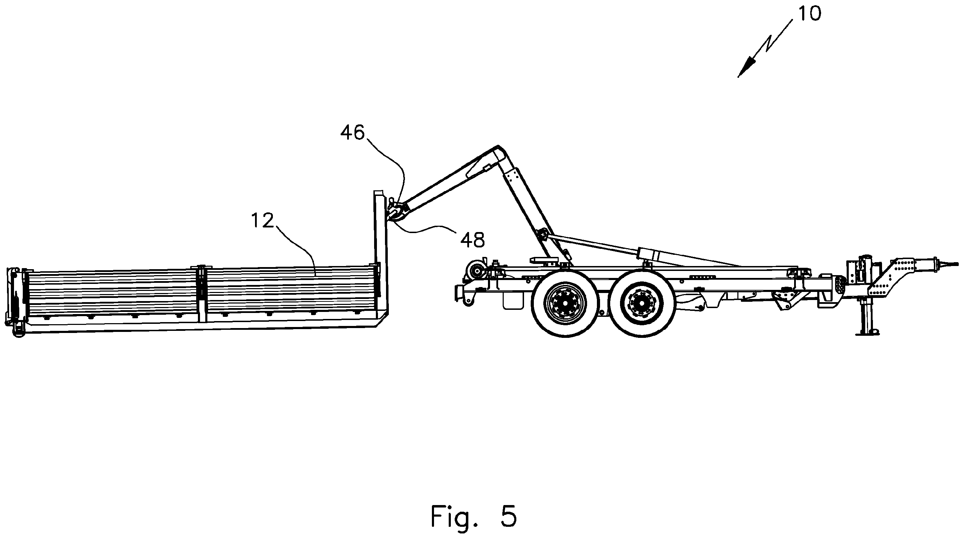

**Fig. 5** zeigt den Endzustand des in Bezug auf Fig. 4 geschilderten Anwendungsfalls nach vollendetem Abladen des Containers 12 vom Hakenliftfahrzeug 10, jedoch vor Abhaken des Hakens 46 vom Griffelement 48. Der in Fig. 5 dargestellte Zustand kann im Übrigen auch als Anfangszustand vor Aufladen des Containers 12 auf das Hakenliftfahrzeug 10 dienen.

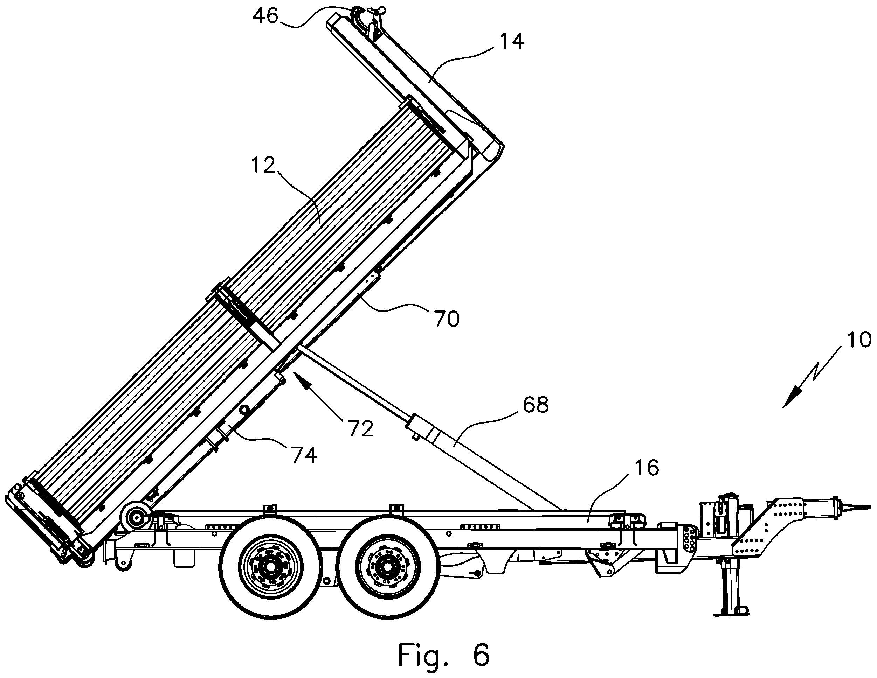

**Fig. 6** zeigt einen Anwendungsfall, bei dem beispielsweise Schüttgüter heckseitig entladen bzw. geschüttet werden können. Dazu befindet sich das Hakenliftfahrzeug 10 in nicht abgesenktem Zustand.

Der Hakenlift 14 weist ein oberes Armteil **70** auf, das über ein Gelenk **72** an einem unteren Armteil **74** angelenkt ist. Das obere Armteil 70 bildet mit dem Gelenk 72 und dem unteren Armteil 74 einem Knickarm. Das untere Armteil 74 ist an seinem hinteren Ende wiederum am Zwischenrahmen 16 angelenkt. Der Hydraulikzylinder 68 greift am oberen Armteil 70 an.

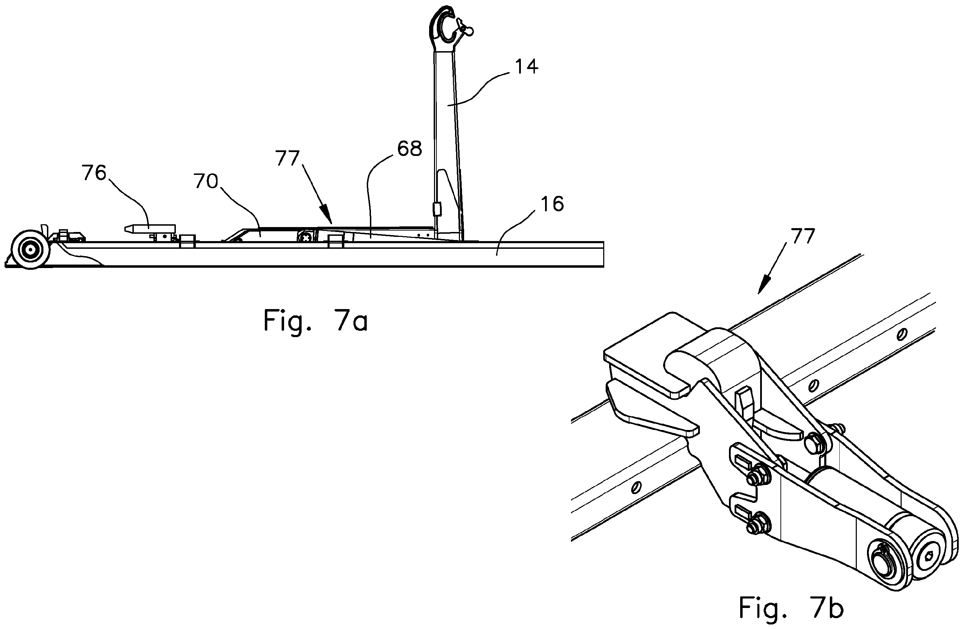

Mittels mehrerer Containerverriegelungen (siehe Fig. 7a und 7b) sowie mittels des Hakens 46 ist der Container 12 am Hakenlift 14 festgelegt. Eine (in Fig. 6 nicht näher dargestellte) Armverriegelung legt bei diesem Anwendungsfall zusätzlich den unteren Armteil 74 an der Unterseite des Containers 12 fest, sodass ein Abknicken des Hakenlifts 14 während des Aufrichtens des Containers 12 verhindert wird. Dazu kann der Container 12 an seiner Unterseite ein oder mehrere T- oder U-Profile aufweisen, in die beispielsweise ein steuerbarer Bolzen der Armverriegelung eingreifen kann oder sich von diesem bzw. diesen lösen lässt.

Durch Ausfahren des Hydraulikzylinders 68 wird nunmehr der Container 12 aufgerichtet und zur Rückseite des Hakenliftfahrzeugs 10 hin abgekippt.

In einer schematischen Detailansicht zeigt Fig. 7a den Hakenlift 14 des Hakenliftfahrzeugs 10 (Fig. 1). Im dargestellten Zustand liegt der Hakenlift 14 auf dem Zwischenrahmen 16 auf. Ferner ist zu erkennen, dass der Hydraulikzylinder 68 am oberen Armteil 70 angreift. Zu erkennen sind des Weiteren mehrere, insbesondere entlang den Längsseiten des Zwischenrahmens 16 angeordnete, Containerverriegelungen, von denen insbesondere eine, insbesondere hintere, Containerverriegelung 76 und eine vordere Containerverriegelung 77 in der Darstellung der Fig. 7a markiert sind. Mittels der Containerverriegelungen, insbesondere der Containerverriegelungen 76, 77 kann der Container lösbar am Zwischenrahmen 16 festgelegt werden.

Bei einer alternativen Ausführungsform kann das Hakenliftfahrzeug nur hintere Containerverriegelungen 76 aufweisen.

Dazu zeigt Fig. 7b eine beispielhafte perspektivische Ansicht der vorderen Containerverriegelung 77, die als hydraulisch betätigbare Bolzenverriegelung ausgebildet ist.

Wenigstens eine der Containerverriegelungen 76, 77 kann auch als manuell bedienbare Bolzenverriegelung ausgebildet sein. Dazu kann sie einen manuell entnehmbaren und/oder manuell einsetzbaren Steckbolzen aufweisen. Somit lassen sich Kosten reduzieren.

Wenigstens eine der Verriegelungen 21 (Fig. 1) und/oder der Containerverriegelungen 76, 77 kann einen Zustandssensor aufweisen. Der Zustandssensor kann eingerichtet sein, den Zustand zu detektieren, in dem sich die jeweilige Verriegelung 21 bzw. Containerverriegelung 76, 77 befindet. Insbesondere kann er eingerichtet sein zu detektieren, ob sie sich in verriegeltem oder unverriegeltem Zustand befindet.

Der Zustandssensor kann einen Näherungsschalter aufweisen und/oder als Näherungsschalter ausgebildet sein. Insbesondere kann er als elektronischer Sensor ausgebildet sein.

Insbesondere können vier Zustandssensoren vorgesehen sein. Allgemein kann jede der Verriegelungen 21 und/oder jede der Containerverriegelungen 76, 77 mit einem solchen Zustandssensor ausgerüstet sein.

Der Zustandssensor kann mit einer zentralen Steuerungseinheit des Hakenliftfahrzeugs 10 verbunden sein.

Die zentrale Steuerungseinheit ist und der Zustandssensor kann ausgebildet sein, eine der Funktionalitäten des Hakenliftfahrzeugs 10, beispielsweise ein Abkippen des Containers nach hinten und/oder zu einer der Längsseiten hin, freizugeben und/oder zu sperren. Insbesondere kann die Freigabe bzw. Sperrung in Abhängigkeit vom, insbesondere durch den Zustandssensor detektierten, Zustand der jeweiligen Verriegelung 21 bzw. Containerverriegelung 76, 77 erfolgen.

Somit lassen sich Fehlbedienungen des Hakenliftfahrzeugs 10 vermeiden. Insbesondere kann dadurch vermieden werden, dass ein Benutzer des Hakenliftfahrzeugs 10 versucht, den Container nach hinten oder zur Seite abzukippen, obgleich die jeweilige Funktionalität (noch) durch eine oder mehrere der Verriegelungen 21 und/oder der Containerverriegelungen 76, 77 gesperrt ist. Insbesondere bei manuell bedienbaren Verriegelungen 21 bzw. Containerverriegelungen 76, 77 lassen sich hierdurch auf kostengünstige Weise Beschädigungen am Hakenliftfahrzeug 10 vermeiden.

**Fig. 8** zeigt das Hakenliftfahrzeug 10 in einer Seitenansicht mit nach links abgekipptem Container 12. In dieser Stellung lässt sich das Hakenliftfahrzeug 10 als Seitenkipper, beispielsweise zum seitlichen Schütten von Schüttgut, verwenden.

Zu erkennen sind insbesondere die beiden Kippzylinder 20, die in diesem Zustand vollständig ausgefahren sind. Über Kipphebel **78** greifen die Kippzylinder 20 am Zwischenrahmen 16 an.

Die entlang der linken Längsseite des Hakenliftfahrzeugs 10 befindlichen Verriegelungen 21 sind in dem in Fig. 8 dargestellten Zustand verriegelt. Somit ist der Zwischenrahmen 16 und damit auch der Container 12 zur linken Seite des Hakenliftfahrzeugs 10 abkippbar bzw. abgekippt.

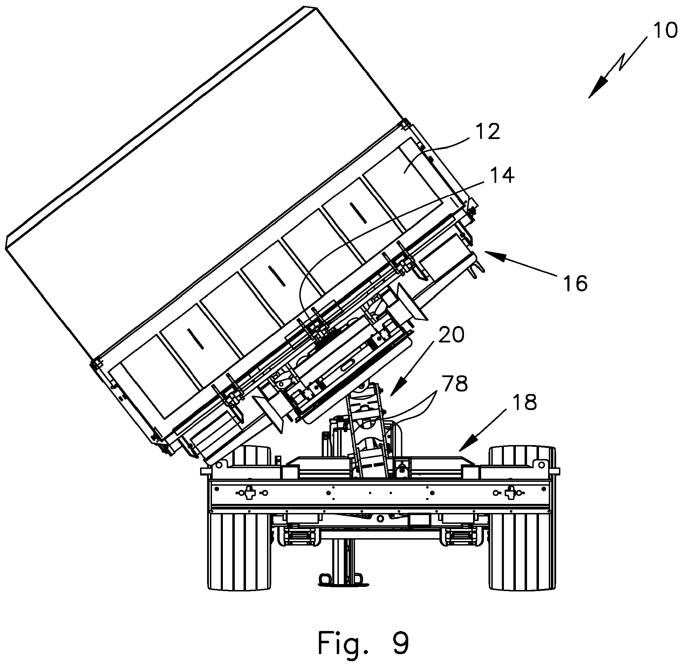

**Fig. 9** zeigt das Hakenliftfahrzeug 10 von hinten in der Stellung gemäß Fig. 8. Zu erkennen ist insbesondere die Neigung des Containers 12 zur linken Seite hin.

Zu erkennen ist des Weiteren, dass beim seitlichen Abkippen der Zwischenrahmen 16 mitsamt dem Hakenlift 14 seitlich abgekippt wird. Dazu stützen sich die Kippzylinder 20 mit den Kipphebeln 78 am Fahrgestell 18 ab und stemmen den Zwischenrahmen 16 in einem in etwa mittigen Bereich nach oben.

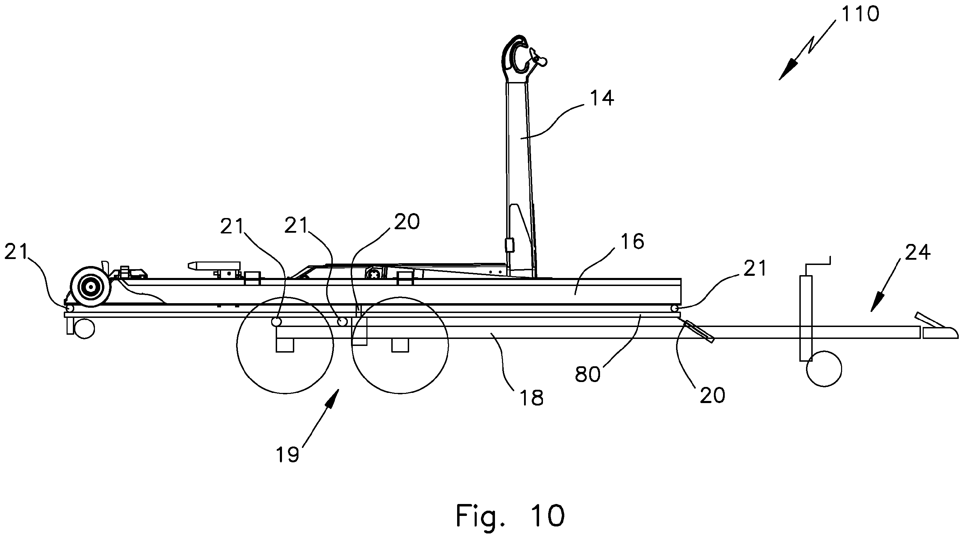

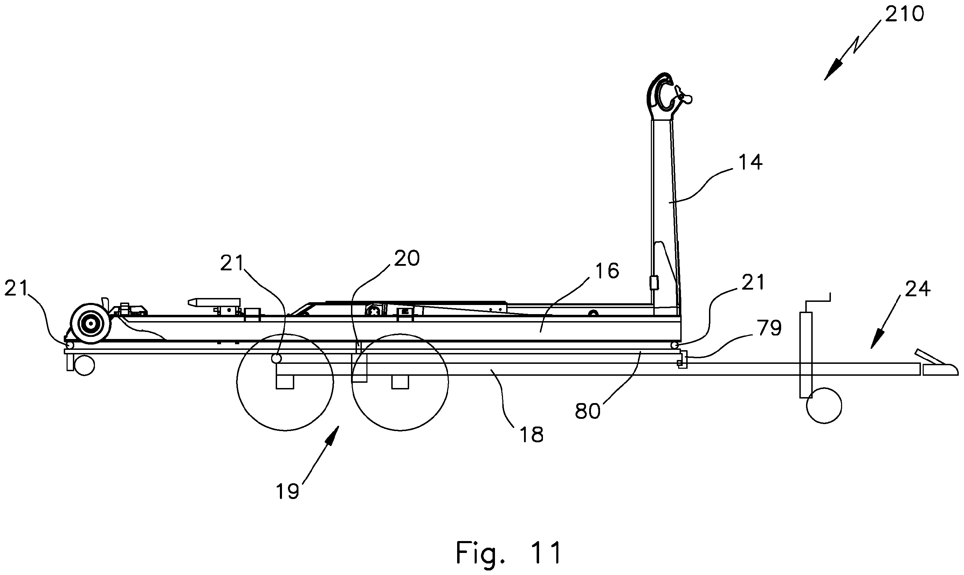

**Fig. 10** **und** **11** zeigen zwei weitere Ausführungsbeispiele der Erfindung in Form der Hakenliftfahrzeuge **110** (Fig. 10) und 210 (Fig. 11). Die Darstellungen sind schematisiert, um die diesen Ausführungsbeispielen zugrundeliegenden besonderen Prinzipien hervorzuheben. Soweit nicht anders beschrieben, können Merkmale des Hakenliftfahrzeugs 10 in analoger Weise bei den Hakenliftfahrzeugen 110 und/oder 210 verwirklicht sein.

Beide Hakenliftfahrzeuge 110, 210 sind wiederum als Anhänger ausgebildet, wobei eine Ausführung als LKW ebenso grundsätzlich denkbar ist.

Diese Ausführungsformen zeichnen sich insbesondere dadurch aus, dass auf ein Pendelachsaggregat und auf eine Verschwenkbarkeit der Deichsel verzichtet werden kann. So können sich Kostenvorteile ergeben. Diese Ausführungsformen können daher bevorzugt im Bereich kleinerer Anhänger, beispielsweise als PKW-Anhänger, verwendet werden.

Beiden Ausführungsformen gemeinsam ist, dass ihr jeweiliges Fahrgestell 18 eine durchgängige Deichsel 24 aufweist. Ferner weisen sie eine als Tandemachse ausgebildete Achse 19 auf. Die Achse 19 kann wiederum verstellbar ausgebildet sein.

Zwischen dem im Wesentlichen analog zum Hakenliftgerät 10 ausgebildeten Zwischenrahmen 16 mit dem Hakenlift 14 und dem Fahrgestell 18 ist jeweils ein Mittelrahmen **80** angeordnet.

Das Hakenliftfahrzeug 110 weist zwei - geeignet geformte - Kippzylinder 20, insbesondere einen Kippzylinder 20 im Bereich der Achse 19 sowie einen weiter vorne gelegenen Kippzylinder 20, auf. Dieser vordere Kippzylinder 20 verbindet den Mittelrahmen 80 mit dem Fahrgestell 18.

Das Hakenliftfahrzeug 210 weist nur einen achsnahen Kippzylinder 20 auf.

Mit Ausnahme des vorderen Kippzylinders 20 verbinden die übrigen Kippzylinder 20 wiederum das Fahrgestell 18 mit dem Zwischenrahmen 16 und/oder mit dem Hakenlift 14.

Beide Ausführungsformen weisen zudem mehrere Verriegelungen 21 auf, die im Wesentlichen analog zu den Verriegelungen 21 des Hakenliftfahrzeugs 10 ausgebildet sein können.

Bei beiden Hakenliftfahrzeugen 110, 210 kann der Zwischenrahmen 16 mitsamt dem Hakenlift 14 - und somit auch ein etwaiger, aufgeladener Container - jeweils seitlich abgekippt werden, indem der jeweilige achsnahe Kippzylinder 20 betätigt wird, wobei entlang einer Längsseite des jeweiligen Fahrgestells 18 Verriegelungen 21 zwischen dem Zwischenrahmen 16 und dem Mittelrahmen 80 geschlossen und entlang der jeweils anderen Längsseite geöffnet sind.

Das Hakenliftgerät 110 weist insbesondere im Bereich der Achse 19 ein oder mehrere Reihen, hier insbesondere zwei Reihen, von Verriegelungen 21 auf, die den Mittelrahmen 80 lösbar und drehbar am Fahrgestell 18 festlegen bzw. verriegeln. Wahlweise mittels einer dieser Reihen von Verriegelungen 21 sowie durch Betätigung des vorderen Kippzylinders 20 kann bei dem Hakenliftgerät 110 somit der Mittelrahmen 80 und damit der Zwischenrahmen 16 mitsamt dem Hakenlift 14 heckseitig abgesenkt werden.

Eine heckseitige Absenkung lässt sich auch bei dem Hakenliftgerät 210 erzielen. Dazu ist die vordere Verriegelung 79 zu öffnen und alle Verriegelungen 21, insbesondere die hier einzige Reihe von Verriegelungen 21 zwischen dem Mittelrahmen 80 und dem Fahrgestell 18, sind zu schließen. Wird nun der achsnahe Kippzylinder 20 betätigt, wird wiederum der Mittelrahmen 80 und damit der Zwischenrahmen 16 über die Reihe von Verriegelungen 21 und damit heckseitig abgesenkt.

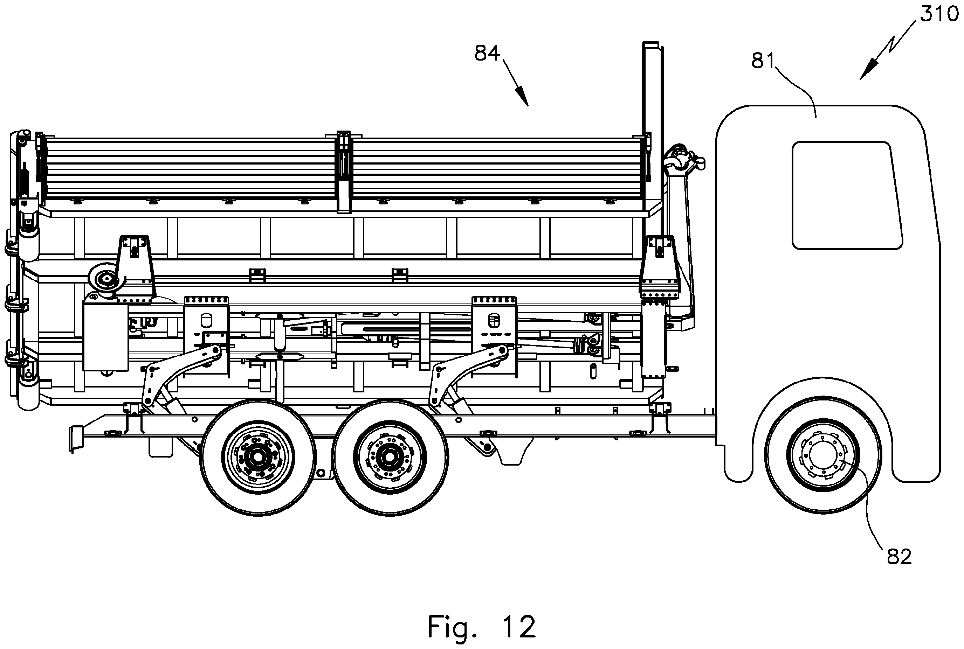

**Fig. 12** zeigt schließlich ein viertes Hakenliftfahrzeug **310.** Das Hakenliftfahrzeug 310 ist als Lkw ausgebildet. In seinem Aufbau entspricht es weitgehend dem Hakenliftfahrzeug 10 (Fig. 1 bis Fig. 9). Ein wesentlicher Unterschied besteht darin, dass anstelle der Zugöse 32, der Flansche 34 und der Stütze 36 (jeweils Fig. 1) das übrige Hakenliftfahrzeug 310 auf ein Lkw-Fahrgestell mit Fahrergehäuse **81** und einer Vorderachse **82** sowie einen Antrieb montiert ist. Somit ist das Hakenliftfahrzeug 310 selbst motorisiert und benötigt zum Antrieb kein weiteres Zugfahrzeug.

Ferner ist Fig. 12 entnehmbar, dass das Hakenliftfahrzeug 310 in seinem Ladeabschnitt **84,** insbesondere ohne Berücksichtigung der im Bereich des Fahrergehäuses 81 angeordneten Vorderachse 82, zweiachsig ausgebildet ist.

### Bezugszeichenliste

- 10: Hakenliftfahrzeug
- 12: Container
- 14: Hakenlift
- 16: Zwischenrahmen
- 17: Führungsrolle
- 18: Fahrgestell
- 19: Achse
- 20: Kippzylinder
- 21: Verriegelung
- 22: Seitkippvorrichtung
- 23: Pendelachsaggregat
- 24: Deichsel
- 26: Anbindung
- 28: Verschwenkmechanik
- 29: Boden
- 30: Verbindungsabschnitt
- 32: Zugöse
- 34: Flansch
- 36: Stütze
- 38: Beleuchtungsträger
- 39: Stützrolle
- 40: Funkfernsteuerung
- 42: Steuerungseinheit
- 44: Steuerungssignal
- 46: Haken
- 47: Verschlusselement
- 48: Griffelement
- 50: seitliche Bordwand
- 52: heckseitige Bordwand
- 54: vorderseitige Bordwand
- 55: Tragwand
- 56: Bordwandverschluss
- 58: Bordwandscharnier
- 60: Rückwandverschluss
- 62: Rückwandscharnier
- 64: Rückwandschwenkgelenk
- 66: Bodenrolle
- 68: Hydraulikzylinder
- 70: oberes Armteil
- 72: Gelenk
- 74: unteres Armteil
- 76: Containerverriegelung
- 77: vordere Containerverriegelung
- 78: Kipphebel
- 79: vordere Verriegelung
- 80: Mittelrahmen
- 81: Fahrergehäuse
- 82: Vorderachse
- 84: Ladeabschnitt
- 110: Hakenliftfahrzeug
- 210: Hakenliftfahrzeug
- 310: Hakenliftfahrzeug

- F: Fahrtrichtung
- H: Höhenrichtung
- L: Längsrichtung

## Patentansprüche

1. **Hakenliftfahrzeug** (10, 110, 210, 310) mit einem Hakenlift (14) zum Auf- und/oder Abladen eines Containers (12),
wobei
das Hakenliftfahrzeug (10, 110, 210, 310) eingerichtet ist, den aufgeladenen Container (12) entlang wenigstens einer Längsseite des Hakenliftfahrzeugs (10, 110, 210, 310) seitlich abzukippen, wobei das Hakenliftfahrzeug (10, 110, 210, 310) eine Seitkippvorrichtung (22) zum seitlichen Abkippen des aufgeladenen Containers (12) entlang der wenigstens einen Längsseite des Hakenliftfahrzeugs (10, 110, 210, 310) aufweist und wobei die Seitkippvorrichtung (22) einen seitlich abkippbaren Zwischenrahmen (16) umfasst, an dem der Hakenlift (14) oder wenigstens ein Teil des Hakenlifts (14) angeordnet ist, **dadurch gekennzeichnet, dass** der Container (12) mittels mehrerer Containerverriegelungen (76, 77) des Hakenliftfahrzeugs (10, 110, 210, 310) lösbar am Zwischenrahmen festlegbar ist, wobei eine zentrale Steuerungseinheit vorgesehen ist, die ausgebildet ist, eine der Funktionalitäten des Hakenliftfahrzeugs (10, 110, 210, 310), beispielsweise ein Abkippen des Containers nach hinten und/oder zu einer der Längsseiten hin, freizugeben und/oder zu sperren.

2. Hakenliftfahrzeug nach Anspruch 1, **dadurch gekennzeichnet, dass** das Hakenliftfahrzeug (10, 110, 210, 310) heckseitig absenkbar ausgebildet ist, wobei das Hakenliftfahrzeug (10, 110, 210, 310) ein heckseitig absenkbares Fahrgestell (18) aufweist.

3. Hakenliftfahrzeug nach Anspruch 1 oder 2, **dadurch**
**gekennzeichnet, dass** die Seitkippvorrichtung (22) eingerichtet ist, den Container (12) wahlweise zur linken oder zur rechten Längsseite des Hakenliftfahrzeugs (10, 110, 210, 310) abzukippen.

4. Hakenliftfahrzeug nach einem der Ansprüche 1, 2 oder 3, **dadurch gekennzeichnet, dass** die Seitkippvorrichtung (22) wenigstens einen, insbesondere ein oder zwei, Kippzylinder (20) aufweist.

5. Hakenliftfahrzeug nach Anspruch 3, **dadurch gekennzeichnet, dass** wenigstens einer der Kippzylinder (20) als doppeltwirkender Zylinder ausgebildet ist.

6. Hakenliftfahrzeug nach einem der vorhergehenden Ansprüche,
**dadurch gekennzeichnet, dass** die Seitkippvorrichtung (22) wenigstens zwei Verriegelungen (21), vorzugsweise Bolzen- oder Krampenverriegelungen, aufweist, die eingerichtet sind, den aufgeladenen Container (12), insbesondere durch drehbares Festlegen des Zwischenrahmens (16), an einer Längsseite des Hakenliftfahrzeugs (10, 110, 210, 310) drehbar festzulegen.

7. Hakenliftfahrzeug nach einem der vorhergehenden Ansprüche,
**dadurch gekennzeichnet, dass** der Hakenlift (14) teleskopierbar ist.

8. Hakenliftfahrzeug nach einem der vorhergehenden Ansprüche,
**dadurch gekennzeichnet, dass** das Fahrgestell (18) ein Pendelachsaggregat (23) aufweist und/oder eine Deichsel (24) des Hakenliftfahrzeugs (10, 110, 210, 310) relativ zum Fahrgestell (18) verschwenkbar ausgebildet ist.

9. Hakenliftfahrzeug nach einem der vorhergehenden Ansprüche,
**dadurch gekennzeichnet, dass** das Hakenliftfahrzeug (10, 110, 210, 310), insbesondere heckseitig, einen verstellbaren, insbesondere entlang des Fahrgestells (18) verschiebbaren, Beleuchtungsträger (38) aufweist.

10. Hakenliftfahrzeug nach einem der vorhergehenden Ansprüche,
**dadurch gekennzeichnet, dass** das Hakenliftfahrzeug (10, 110, 210, 310) in seinem Ladeabschnitt (84) ein-, zwei- oder dreiachsig ausgebildet ist.

11. Hakenliftfahrzeug nach einem der vorhergehenden Ansprüche,
**dadurch gekennzeichnet, dass** wenigstens eine seiner Achsen (19) seines Ladeabschnitts (84) entlang seiner Längsrichtung (L) verstellbar, insbesondere hydraulisch verstellbar, ist.

## Claims

1. **Hook-lift vehicle** (10, 110, 210, 310) having a hook-lift (14) for loading and/or unloading a container (12),
the hook-lift vehicle (10, 110, 210, 310) being configured to laterally tilt the loaded container (12) along at least one longitudinal side of the hook-lift vehicle (10, 110, 210, 310), the hook-lift vehicle (10, 110, 210, 310) having a side tilting apparatus (22) for laterally tilting the loaded container (12) along the at least one longitudinal side of the hook-lift vehicle (10, 110, 210, 310), and the side tilting apparatus (22) comprising a laterally tiltable intermediate frame (16) on which the hook-lift (14) or at least part of the hook-lift (14) is arranged, **characterized in that** the container (12) can be detachably fixed to the intermediate frame by means of a plurality of container locks (76, 77) of the hook-lift vehicle (10, 110, 210, 310), a central control unit being provided, which is designed to release and/or block one of the functionalities of the hook-lift vehicle (10, 110, 210, 310), for example tilting of the container backward and/or toward one of the longitudinal sides.

2. Hook-lift vehicle according to claim 1, **characterized in that** the hook-lift vehicle (10, 110, 210, 310) is designed to be able to be lowered on the rear side, the hook-lift vehicle (10, 110, 210, 310) having a chassis (18) that can be lowered on the rear side.

3. Hook-lift vehicle according to either claim 1 or claim 2,
**characterized in that** the side tilting apparatus (22) is configured to selectively tilt the container (12) to the left longitudinal side or to the right longitudinal side of the hook-lift vehicle (10, 110, 210, 310).

4. Hook-lift vehicle according to any of claims 1, 2 or 3,
**characterized in that** the side tilting apparatus (22) has at least one, in particular one or two, tilting cylinders (20).

5. Hook-lift vehicle according to claim 3, **characterized in that** at least one of the tilting cylinders (20) is designed as a double-acting cylinder.

6. Hook-lift vehicle according to any of the preceding claims,
**characterized in that** the side tilting apparatus (22) has at least two locks (21), preferably bolt or staple locks, which are configured to rotatably fix the loaded container (12) on a longitudinal side of the hook-lift vehicle (10, 110, 210, 310), in particular by rotatably fixing the intermediate frame (16).

7. Hook-lift vehicle according to any of the preceding claims,
**characterized in that** the hook-lift (14) is telescopic.

8. Hook-lift vehicle according to any of the preceding claims,
**characterized in that** the chassis (18) has a swing-axle assembly (23) and/or a drawbar (24) of the hook-lift vehicle (10, 110, 210, 310) is designed to be pivotable relative to the chassis (18).

9. Hook-lift vehicle according to any of the preceding claims,
**characterized in that** the hook-lift vehicle (10, 110, 210, 310) has, in particular on the rear side, an adjustable illumination carrier (38), which is in particular displaceable along the chassis (18).

10. Hook-lift vehicle according to any of the preceding claims,
**characterized in that** the hook-lift vehicle (10, 110, 210, 310) is designed in its loading portion (84) so as to be uniaxial, biaxial or triaxial.

11. Hook-lift vehicle according to any of the preceding claims,
**characterized in that** at least one of its axles (19) of its loading portion (84) is adjustable, in particular hydraulically adjustable, in its longitudinal direction (L).

## Revendications

1. Véhicule à système de levage à crochet (10, 110, 210, 310) comportant un système de levage à crochet (14) permettant de charger et/ou de décharger un conteneur (12),
le véhicule à système de levage à crochet (10, 110, 210, 310) étant conçu pour faire basculer latéralement le conteneur (12) chargé le long d'au moins un côté longitudinal du véhicule à système de levage à crochet (10, 110, 210, 310), le véhicule à système de levage à crochet (10, 110, 210, 310) présentant un dispositif de basculement latéral (22) pour le basculement latéral du conteneur (12) chargé le long de l'au moins un côté longitudinal du véhicule à système de levage à crochet (10, 110, 210, 310) et le dispositif de basculement latéral (22) comprenant un cadre intermédiaire (16) pouvant basculer latéralement, au niveau duquel est disposé le système de levage à crochet (14) ou au moins une partie du système de levage à crochet (14), **caractérisé en ce que** le conteneur (12) peut être fixé de manière amovible au cadre intermédiaire au moyen de plusieurs mécanismes de verrouillage de conteneur (76, 77) du véhicule à système de levage à crochet (10, 110, 210, 310), une unité de commande centrale étant prévue, laquelle est configurée pour libérer et/ou pour bloquer l'une des fonctionnalités du véhicule à système de levage à crochet (10, 110, 210, 310), par exemple un basculement du conteneur vers l'arrière et/ou vers l'un des côtés longitudinaux.

2. Véhicule à système de levage à crochet selon la revendication 1,
**caractérisé en ce que** le véhicule à système de levage à crochet (10, 110, 210, 310) est conçu de manière à pouvoir s'abaisser côté arrière, le véhicule à système de levage à crochet (10, 110, 210, 310) présentant un châssis (18) pouvant être abaissé côté arrière.

3. Véhicule à système de levage à crochet selon la revendication 1 ou 2,
**caractérisé en ce que** le dispositif de basculement latéral (22) est conçu pour faire basculer le conteneur (12) au choix vers le côté longitudinal gauche ou droit du véhicule à système de levage à crochet (10, 110, 210, 310).

4. Véhicule à système de levage à crochet selon l'une des revendications 1, 2 ou 3, **caractérisé en ce que** le dispositif de basculement latéral (22) présente au moins un, en particulier un ou deux, vérin de basculement (20).

5. Véhicule à système de levage à crochet selon la revendication 3,
**caractérisé en ce qu'**au moins l'un des vérins de basculement (20) est conçu comme vérin à double action.

6. Véhicule à système de levage à crochet selon l'une des revendications précédentes, **caractérisé en ce que** le dispositif de basculement latéral (22) présente au moins deux mécanismes de verrouillage (21), de préférence des mécanismes de verrouillage à cheville ou à crampons, lesquels sont conçus pour fixer en rotation le conteneur (12) chargé, en particulier par fixation en rotation du cadre intermédiaire (16), au niveau d'un côté longitudinal du véhicule à système de levage à crochet (10, 110, 210, 310).

7. Véhicule à système de levage à crochet selon l'une des revendications précédentes, **caractérisé en ce que** le système de levage à crochet (14) est télescopique.

8. Véhicule à système de levage à crochet selon l'une des revendications précédentes, **caractérisé en ce que** le châssis (18) présente un groupe d'essieux pendulaires (23) et/ou un timon (24) du véhicule à système de levage à crochet (10, 110, 210, 310) est conçu de manière à pouvoir pivoter par rapport au châssis (18).

9. Véhicule à système de levage à crochet selon l'une des revendications précédentes, **caractérisé en ce que** le véhicule à système de levage à crochet (10, 110, 210, 310) présente, en particulier côté arrière, un support d'éclairage (38) pouvant être réglé, en particulier pouvant coulisser le long du châssis (18).

10. Véhicule à système de levage à crochet selon l'une des revendications précédentes, **caractérisé en ce que** le véhicule à système de levage à crochet (10, 110, 210, 310) est conçu avec un, deux ou trois essieux dans sa section de chargement (84).

11. Véhicule à système de levage à crochet selon l'une des revendications précédentes, **caractérisé en ce qu'**au moins l'un de ses essieux (19) de sa section de chargement (84) peut être réglé, en particulier peut être réglé de manière hydraulique, le long de sa direction longitudinale (L).
